# EUROPÄISCHE PATENTSCHRIFT

(11) **EP 1 926 378 B1**
(45) Veröffentlichungstag und Bekanntmachung des Hinweises auf die Patenterteilung: **29.06.2016**
(21) Anmeldenummer: 06777111.3
(22) Anmeldetag: 29.08.2006
(51) Int. Cl.: A01P 13/00, A01N 47/28, A01N 47/36, A01N 47/38, A01N 25/30

(54) **LAGERSTABILE FORMULIERUNGEN VON SULFONAMIDEN**
STORAGE-STABLE FORMULATIONS OF SULFONAMIDES
FORMULATIONS DE SULFONAMIDES STABLES AU STOCKAGE

(30) Priorität: 08.09.2005 EP 05019531
(43) Veröffentlichungstag der Anmeldung: 04.06.2008
(73) Patentinhaber: Bayer Intellectual Property GmbH, 40789 Monheim am Rhein (DE)
(72) Erfinder: SCHNABEL, Gerhard, 63820 Elsenfeld (DE); KRAUSE, Hans-Peter, 65719 Hofheim (DE); GROHS, Ralph, 40219 Düsseldorf (DE)
(74) Vertreter: BIP Patents
(86) Internationale Anmeldenummer: PCT/EP2006/008447
(87) Internationale Veröffentlichungsnummer: WO 2007/028529

(56) Entgegenhaltungen:
- EP-A- 0 764 404
- WO-A-98/34482
- WO-A1-2004/073403
- WO-A2-2007/028504
- BAYER CROPSCIENCE: "Scherheitsdatenblatt gemäss 91/155/EWG", INTERNET CITATION, 13 November 2003 (2003-11-13), XP002436854, Retrieved from the Internet: URL:http://www.barenbrug.lu/download/ATLAN TIS%20WG%20Komponente%201.pdf [retrieved on 2007-06-06]
- BAYER CROPSCIENCE: "Sicherheitsdatenblatt gemäss 91/155/EWG15.01.2004", INTERNET CITATION, 15 January 2004 (2004-01-15), XP002436855, Retrieved from the Internet: URL:http://www.barenbrug.lu/download/HUSAR .pdf [retrieved on 2007-06-06]

## Beschreibung

Die vorliegende Erfindung betrifft das Gebiet der Pflanzenschutzmittelformulierungen. Insbesondere betrifft die Erfindung lagerstabile feste Herbizid-Formulierungen, welche herbizide Wirkstoffe aus der Gruppe der Sulfonamide und deren Salzen, insbesondere Phenylsulfonamide, wie Phenylsulfonylaminocarbonyltriazolinone oder Phenylsulfonylharnstoffe, Heteroarylsulfonamide und sonstige Sulfonamide sowie deren Salze, enthalten.

Wirkstoffe für den Pflanzenschutz werden im allgemeinen nicht in ihrer reinen Form eingesetzt. In Abhängigkeit von dem Anwendungsgebiet und der Anwendungsart, sowie von physikalischen, chemischen und biologischen Parametern wird der Wirkstoff in Mischung mit üblichen Hilfs- und Zusatzstoffen als Wirkstoffformulierung eingesetzt. Auch die Kombinationen mit weiteren Wirkstoffen zur Erweiterung des Wirkungsspektrums und/oder zum Schutz der Kulturpflanzen (z.B. durch Safener, Antidote) sind bekannt.

Formulierungen von Wirkstoffen für den Pflanzenschutz sollten im allgemeinen eine hohe chemische und physikalische Stabilität, eine gute Applizierbarkeit und Anwenderfreundlichkeit und eine breite biologische Wirkung mit hoher Selektivität aufweisen.

Feste Formulierungen von Wirkstoffen aus der Gruppe der Sulfonylharnstoffe sind an sich bekannt, etwa aus WO-A-97/10714.

Herbizide Wirkstoffe aus der Gruppe der Sulfonamide weisen im allgemeinen ein hohes Maß an chemischer Reaktivität auf und neigen zum chemischen Abbau, z.B. durch Hydrolyse. Dies muss im Hinblick auf eine ausreichende Lagerstabilität in den Formulierungen kritisch beurteilt werden, wobei zusätzlich auch die jeweils zu erwartenden Lagertemperaturen in den beabsichtigten Märkten zu berücksichtigen sind.

Eine Stabilisierung von in festen Formulierungen enthaltenen Sulfonylharnstoffen wird z.B. in JP-A-62-084004 beschrieben, indem Calciumcarbonat und Na-Tripolyphosphat als Stabilisatoren zugesetzt werden. Daneben können aber auch die Formulierungen selbst, bedingt durch die hierin enthaltenen Hilfs- und Zusatzstoffe, die Stabilität der Wirkstoffe beeinflussen.

WO-A-98/34482 beschreibt Versuchsergebnisse mit den Phenylsulfonylharnstoffen Tritosulfuron und Metsulfuron, wonach Zusatzstoffe (Adjuvantien) aus der Gruppe der Fettalkoholethoxylate und ethoxylierten Fettamine eine geringere Lagerstabilität bewirken als Adjuvantien aus der Gruppe der Natrium-Salze der aliphatischen Sulfonsäuren, wie Na-Alkansulfonate und Na-alpha-Olefinsulfonate. EP-A-764404 beschreibt eine Stabilisierung des Heteroarylsulfonylharnstoffs Flazasulfuron durch Verwendung von Na-Dioctylsulfosuccinat.

WO2004/073403 beschreibt ein Verfahren zur Herstellung wasserdispergierbarer Granulate in Anwesenheit verschiedener Sulfonamide aus der Klasse der Triazolinone und der Triazinylsulfonylharnstoffe.

Entsprechende Stabilitätsuntersuchungen mit Wirkstoffen aus der Gruppe Phenylsulfonylaminocarbonyltriazolinone allein und in Mischungen mit anderen Wirkstoffen aus der Gruppe der Sulfonamide sind dagegen nicht bekannt. In eigenen Versuchen wurde gefunden, dass insbesondere Netzmittel, wie anionische Netzmittel aus der Gruppe der Alkyl-Sulfate und -Sulfonate sowie nicht-ionische Netzmittel aus der Gruppe der Alkylalkoxylate, die standardmäßig in Pflanzenschutzmittelformulierungen eingesetzt werden, zu einer Instabilität von Wirkstoffen aus der Gruppe der Sulfonamide führen können.

Die Aufgabe der vorliegenden Erfindung bestand darin, eine verbesserte feste Pflanzenschutzmittelformulierung zur Verfügung zu stellen, welche eine hohe Lagerstabilität von Wirkstoffen aus der Gruppe der Sulfonamide ermöglicht und daneben eine unverändert hohe biologische Effektivität und Kulturpflanzenverträglichkeit aufweist.

Diese Aufgabe wird gelöst durch die feste, wasserdispergierbare Formulierung gemäß der vorliegenden Erfindung.

Die vorliegende Erfindung betrifft somit eine feste, wasserdispergierbare Formulierung enthaltend:
(a) ein oder mehrere Wirkstoffe aus der Gruppe der Sulfonamide und deren Salze, mit mindestens einem Wirkstoff aus der Gruppe der Phenylsulfonylaminocarbonyltriazolinone,
(b) ein oder mehrere Trägermaterialien,
   wobei
(c) ein oder mehrere Netzmittel aus der Gruppe der Naphthalinsulfonsäuren und der Gruppe der Sulfobernsteinsäure-Derivate sowie die Salze dieser Gruppen verwendet werden.

Darüber hinaus kann die erfindungsgemäße feste, wasserdispergierbare Formulierung als weitere Komponenten gegebenenfalls noch enthalten:
(d) weitere üblichen Hilfs- und Zusatzstoffe,
(e) ein oder mehrere Safener, und für die Safener-Zugabe gegebenenfalls benötigte
   (e-1) Lösungsmittel,
   (e-2) Emulgatoren und
   (e-3) Trägermaterialien,

Eine bevorzugte Ausführungsform der vorliegenden Erfindung besteht in der Verwendung von mindestens zwei oder mehreren Wirkstoffe aus der Gruppe der Sulfonamide und deren Salze (Komponente a), vorzugsweise mit Wirkstoffen aus der Gruppe der Phenylsulfonamide, wie Phenylsulfonylaminocarbonyltriazolinone oder Phenylsulfonylharnstoffe.

Eine weitere bevorzugte Ausführungsform der vorliegenden Erfindung besteht in der Verwendung von mindestens zwei oder mehreren Wirkstoffe aus der Gruppe der Sulfonamide und deren Salze (Komponente a), vorzugsweise mit Wirkstoffen aus der Gruppe der Phenylsulfonamide, wie Phenylsulfonylaminocarbonyltriazolinone oder Phenylsulfonylharnstoffe, und von ein oder mehreren Safenern (Komponente e) und den für die Safener-Zugabe gegebenenfalls benötigten Lösungsmitteln (Komponente e-1), Emulgatoren (Komponente e-2) und Trägermaterialien (Komponente e-3).

Als Sulfonamide (Komponente a) bevorzugt sind Phenylsulfonamide, wie Phenylsulfonylaminocarbonyltriazolinone oder Phenylsulfonylharnstoffe, Heteroarylsulfonamide und sonstige Sulfonamide wie Amidosulfuron, sowie deren Salze. Als Phenylsulfonamide kommen bevorzugt Verbindungen aus der Gruppe der Phenylsulfonylaminocarbonyltriazolinone oder der Phenylsulfonylharnstoffe in Frage. Die Sulfonamide sind kommerziell erhältlich und/oder nach bekannten Verfahren herstellbar wie sie z.B. beschrieben sind in EP-A-7687, EP-A-30138, US 5,057,144 und US 5,534,486.

Als Phenylsulfonamide kommen lodosulfuron-methyl und dessen Natriumsalz, Propoxycarbazone und dessen Natriumsalz, in Frage

Die vorstehend aufgeführten Wirkstoffe sind z.B. bekannt aus "The Pesticide Manual", 12. Auflage, The British Crop Protection Council (2000), oder den nach den einzelnen Wirkstoffen aufgeführten Literaturstellen.

Ganz besonders bevorzugt von den Wirkstoffen aus der Gruppe der Sulfonamide und deren Salze (Komponente a) sind Propoxycarbazone und dessen Natriumsalz (Propoxycarbazon-methyl-natrium), , Amidosulfuron und dessen Natriumsalz (Amidosulfuron-methyl-natrium), lodosulfuron-methyl und dessen Natriumsalz (lodosulfuron-methyl-natrium),.

Die Wirkstoffe aus der Gruppe der Sulfonamide und deren Salze (Komponente a) sind in den erfindungsgemäßen Formulierungen im allgemeinen in Mengen von 0,1 - 70 Gew.-%, bevorzugt 0,3 - 60 Gew.-%, besonders bevorzugt 0,5 - 50 Gew.-% enthalten, dabei bezieht sich die Angabe "Gew.-%" (Gewichtsprozent) hier und in der gesamten Beschreibung, wenn nicht anders definiert, auf das relative Gewicht der jeweiligen Komponente bezogen auf das Gesamtgewicht der Formulierung.

Die Trägermaterialien (Komponente b) in den erfindungsgemäßen Formulierungen können einer Gruppe entnommen werden, welche Mineralien, Carbonate, Sulfate und Phosphate von Erdalkali- und Erdmetallen, wie Calciumcarbonat, polymere Kohlenhydrate, Gerüstsilikate, wie Fällungskieselsäuren mit geringer Saugfähigkeit, und natürliche Gerüstsilikate, wie Kaolin, umfasst.

Typische Vertreter geeigneter Trägermaterialien sind unter anderem ^{®}Agsorb LVM-GA (Attapulgit), ^{®}Harborlite 300 (Perlit), ^{®}Collys HV (modifizierte Stärke), ^{®}Omya-Kreide (Calciumcarbonat), ^{®}Extrusil (Fällungskieselsäure), ^{®}Kaolin Tec 1 (Kaolin, Aluminiumhydrosilicat), ^{®}Steamic 00S (Talk, Magnesiumsilicat).

Bevorzugt sind hier natürliche Gerüstsilikate und Calciumcarbonat-Typen wie ^{®}Omya-Kreide (Calciumcarbonat), ^{®}Tec1 (Kaolin) und ^{®}Harborlite 300 (Perlit), besonders bevorzugt natürliche Gerüstsilikate wie ^{®}Kaolin Tec 1 (Kaolin, Aluminiumhydrosilicat) und ^{®}Harborlite 300 (Perlit).

Der Anteil der Trägermaterialien in den erfindungsgemäßen Formulierungen (Komponente b) kann 0,1 - 90 Gew.-%, bevorzugt 5 - 50 Gew.-%, besonders bevorzugt 10 - 30 Gew.-% betragen.

Die Netzmittel aus der Gruppe der Naphthalinsulfonsäuren und der Gruppe der Sulfobernsteinsäure-Derivate sowie die Salze dieser Gruppen (Komponente c) in den erfindungsgemäßen Formulierungen können aus einer Gruppe ausgewählt werden, die einerseits Di-Ester der Sulfobernsteinsäure enthält sowie deren Salze (Sulfosuccinate) und andererseits alkylierte Naphthalinsulfonsäuren und deren Salze enthält.

Typische Vertreter geeigneter Netzmittel sind unter anderem ^{®}Aerosol OTB (Dioctylsulfosuccinat), ^{®}Morwet EFW (alkylierte Naphthalinsulfonate), ^{®}Nekal BX (alkylierte Naphthalinsulfonate), ^{®}Galoryl MT 804 (alkylierte Naphthalinsulfonate).

Bevorzugt sind hier die Salze der alkylierten Naphthalinsulfonsäuren und die Salze der Dioctylsulfobernsteinsäure, besonders bevorzugt die Natriumsalze alkylierter Naphthalinsulfonate wie z.B. ^{®}Morwet EFW, und die Natriumsalze der Dioctylsulfobernsteinsäure wie z.B. ^{®}Aerosol OTB.

Der Anteil der Netzmittel in den erfindungsgemäßen Formulierungen (Komponente c) kann 0,1 - 50 Gew.-%, vorzugsweise 0,25 - 30 Gew.-%, besonders bevorzugt 0,5 - 30 Gew.-% betragen.

Zu den weiteren üblichen Hilfs- und Zusatzstoffen (Komponente d), die gegebenenfalls in den erfindungsgemäßen Formulierungen enthalten sein können, gehören beispielsweise Dispergatoren, Desintegrationsmittel, Antischaum-Mittel und Haftvermittler.

Geeignete Dispergatoren können ausgewählt werden aus der Gruppe ethoxylierte Triarylphenole, deren gegebenenfalls partielle Ester mit Phosphorsäure, Ligninsulfonsäuren, Kondensationsprodukte aromatischer, gegebenenfalls mehrkerniger, Sulfonsäuren (Naphthalinsulfonsäure) mit Formaldehyd, Kondensationsprodukte von gegebenenfalls mehrkernigen Phenolen mit Formaldehyd und Na-Sulfit, Sulfonsäuren mehrkerniger Aromaten, sowie die Alkali-, Erdkali- und Ammoniumsalze diese Stoffe.
Typische Vertreter geeigneter Dispergatoren sind unter anderem ^{®}Soprophor BSU (phosphatiertes Triarylphenolethoxylat), ^{®}Borresperse NA (Ligninsulfonat), ^{®}Rapidaminreserve D (Kondensationsprodukt Phenol mit Na-Sulfit und Formaldehyd), ^{®}Galoryl DT-Marken (Kondensationsprodukt aromatischer Sulfonsäuren mit Formaldehyd), ^{®}Morwet D425 (Kondensationsprodukt aus Naphthalinsulfonsäure und Formaldehyd).
Bevorzugt sind Kondensationsprodukte von aromatischen Sulfonsäuren mit Formaldehyd und deren Salze, besonders bevorzugt sind die Natriumsalze von Naphthalinsulfonsäuren mit Formaldehyd, wie ^{®}Galoryl DT505 und ^{®}Morwet D425 (beides Kondensationsprodukte aus Naphthalinsulfonsäure und Formaldehyd). Der Anteil an Dispergatoren, die gegebenenfalls in den erfindungsgemäßen Formulierungen enthalten sein können, kann 1 - 50 Gew.-%, bevorzugt 5 - 30 Gew.-%, besonders bevorzugt 10 - 20 Gew.-% betragen.

Geeignete Desintegrationsmittel können ausgewählt werden aus der Gruppe der modifizierten Kohlenhydrate, wie mikrokristalline Cellulose, und quervernetzten Polyvinylpyrrolidone.
Typische Vertreter geeigneter Desintegrationsmittel sind unter anderem ^{®}Avicel PH 101 (mikrokristalline Cellulose), ^{®}Agrimer XLF (quervernetztes Polyvinylpyrrolidon), ^{®}Disintex 200 (quervernetztes Polyvinylpyrrolidon).
Bevorzugt sind quervernetzte Polyvinylpyrrolidone, wie ^{®}Agrimer XLF.
Der Anteil an Desintegrationsmitteln, die gegebenenfalls in den erfindungsgemäßen Formulierungen enthalten sein können, kann 0,1 - 50 Gew.-%, bevorzugt 0,5 - 25 Gew.-%, besonders bevorzugt 1 - 10 Gew.-% betragen.

Geeignete Antischaum-Mittel können ausgewählt werden aus der Gruppe der Ester der Phosphorsäure mit niederen Alkoholen, C6-C10-Alkohole, Silicontenside (Suspoemulsionen von hydrophobisierten Kieselsäurepartikeln in wässrigen Emulsionskonzentraten auf der Basis flüssiger Silicontenside), wie Polydimethylsiloxan, sowie deren Absorbate an festes Trägermaterial.
Typische Vertreter geeigneter Antischaum-Mittel sind unter anderem ^{®}Rhodorsil 432 (Silicontensid), Butylphosphat, iso-Butylphosphat, n-Octanol, ^{®}Wacker ASP15 (Polydimethylsiloxan, an festem Träger absorbiert), ^{®}Antischaum-Mittel SE (Polydimethylsiloxan).
Bevorzugt sind Suspoemulsionen von hydrophobisierten Kieselsäurepartikeln in wässrigen Emulsionskonzentraten auf der Basis flüssiger Silicontenside, wie ^{®}Antischaum-Mittel SE (Polydimethylsiloxan), und feste Antischaum-Mittel, wie ^{®}Wacker ASP 15 (Polydimethylsiloxan).
Der aktive Anteil an Antischaum-Mitteln, die gegebenenfalls in den erfindungsgemäßen Formulierungen enthalten sein können, kann 0,1 - 10 Gew.-%, bevorzugt 0,3 - 5 Gew.-%, besonders bevorzugt 0,5 - 3 Gew.-% betragen.

Geeignete Haftvermittler können ausgewählt werden aus der Gruppe Polyvinylpyrrolidon (PVP), Polyvinylalkohol, Co-Polymer aus PVP und Dimethylaminoethylmethacrylat, butyliertes PVP, Co-Polymer aus Vinylchlorid und Vinylacetat, Na-Salz des Co-Polymers aus Propensulfonsäure und partiell hydrolysiertem Vinylacetat, Natriumcaseinat, Phenolharze, modifizierte Cellulose-Typen.
Typische Vertreter geeigneter Haftvermittler sind unter anderem ^{®}Luviskol (Polyvinylpyrrolidon), ^{®}Mowiol (Polyvinylalkohol), ^{®}Tylose (modifizierte Cellulose). Bevorzugt sind Polyvinylpyrrolidon-Typen, besonders bevorzugt sind Typen von niedrigem Molekulargewicht wie ^{®}Luviskol K30.
Der Anteil an Haftvermittlern, die gegebenenfalls in den erfindungsgemäßen Formulierungen enthalten sein können, kann 0,5 - 20 Gew.-%, bevorzugt 1 - 10 Gew.-%, besonders bevorzugt 3 - 8 Gew.-% betragen.

Unter den als Komponente (e) gegebenenfalls enthaltenen, mit dem Begriff "Safener" bezeichneten Wirkstoffen werden Verbindungen verstanden, die geeignet sind, phytotoxische Wirkungen von Pflanzenschutzmittelwirkstoffen wie Herbiziden an Kulturpflanzen zu reduzieren.

Die Safener (Komponente e) sind vorzugsweise ausgewählt aus der Gruppe bestehend aus:
a) Verbindungen der Formeln (S-II) bis (S-IV), 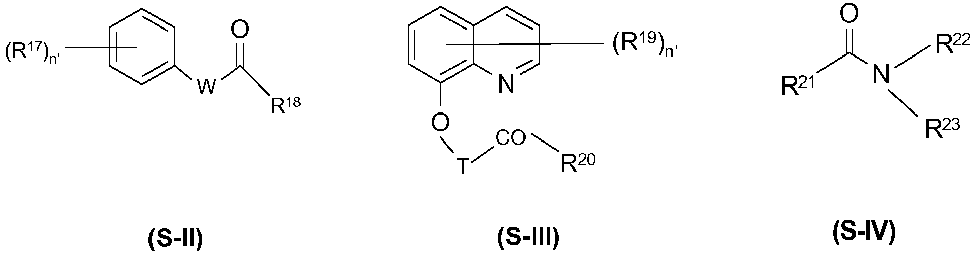 wobei die Symbole und Indizes folgende Bedeutungen haben:
   - n': ist eine natürliche Zahl von 0 bis 5, vorzugsweise 0 bis 3;
   - T: ist eine (C₁ oder C₂)-Alkandiylkette, die unsubstituiert oder mit einem oder zwei (C₁-C₄)Alkylresten oder mit [(C₁-C₃)-Alkoxy]-carbonyl substituiert ist;
   - W: ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N-Atom und höchstens ein O-Atom im Ring enthalten ist, vorzugsweise ein Rest aus der Gruppe (W1) bis (W4), 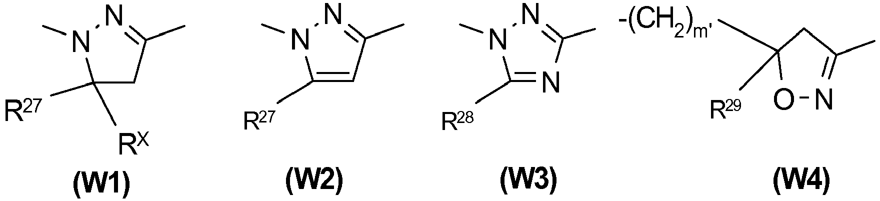
   - m': ist 0 oder 1;
   - R¹⁷ , R¹⁹: sind gleich oder verschieden Halogen, (C₁-C₄)Alkyl, (C₁-C₄)Alkoxy, Nitro oder (C₁-C₄)Haloalkyl,
   - R¹⁸, R²⁰: sind gleich oder verschieden OR²⁴, SR²⁴ oder NR²⁴R²⁵ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-II) bzw. (S-III) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise ein Rest der Formel OR²⁴, NHR²⁵ oder N(CH₃)₂, insbesondere der Formel OR²⁴;
   - R²⁴: ist Wasserstoff oder ein unsubstituierter oder substituierter aliphatischer Kohlenwasserstoffrest, vorzugsweise mit insgesamt 1 bis 18 C-Atomen;
   - R²⁵: ist Wasserstoff, (C₁-C₆)Alkyl, (C₁-C₆)Alkoxy oder substituiertes oder unsubstituiertes Phenyl;
   - R^{x}: ist H, (C₁-C₈)Alkyl, C₁-C₈(Haloalkyl), (C₁-C₄)Alkoxy(C₁-C₈)Alkyl, Cyano oder COOR²⁶, worin R²⁶ Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkyl-silyl ist;
   - R²⁷, R²⁸, R²⁹: sind gleich oder verschieden Wasserstoff, (C₁-C₈)Alkyl, (C₁-C₈)Haloalkyl, (C₃-C₁₂)Cycloalkyl oder substituiertes oder unsubstituiertes Phenyl;
   - R²¹: ist (C₁-C₄)Alkyl, (C₁-C₄)Haloalkyl, (C₂-C₄)Alkenyl, (C₂-C₄)Haloalkenyl, (C₃-C₇)Cycloalkyl, vorzugsweise Dichlormethyl;
   - R²², R²³: ist gleich oder verschieden Wasserstoff, (C₁-C₄)Alkyl, (C₂-C₄)Alkenyl, (C₂-C₄)Alkinyl, (C₁-C₄)Haloalkyl, (C₂-C₄)Haloalkenyl, (C₁-C₄)Alkylcarbamoyl-(C₁-C₄)alkyl, (C₂-C₄)Alkenylcarbamoyl-(C₁-C₄)alkyl, (C₁-C₄)Alkoxy-(C₁-C₄)alkyl, Dioxolanyl-(C₁-C₄)alkyl, Thiazolyl, Furyl, Furylalkyl, Thienyl, Piperidyl, substituiertes oder unsubstituiertes Phenyl, oder R²² und R²³ bilden zusammen einen substituierten oder unsubstituierten heterocyclischen Ring, vorzugsweise einen Oxazolidin-, Thiazolidin-, Piperidin-, Morpholin-, Hexahydropyrimidin- oder Benzoxazinring;
   vorzugsweise Safener folgender Untergruppen von Verbindungen der Formeln (S-II) bis (S-IV):
   - Verbindungen vom Typ der Dichlorphenylpyrazolin-3-carbonsäure (d.h. der Formel (S-II), worin W = (W1) und (R¹⁷)_{n'} = 2,4-Cl₂), vorzugsweise Verbindungen wie 1-(2,4-Dichlorphenyl)-5-(ethoxycarbonyl)-5-methyl-2-pyrazolin-3-carbonsäureethylester (II-1, Mefenpyr-diethyl), Mefenpyr-dimethyl und Mefenpyr (II-0), und verwandte Verbindungen, wie sie in der WO-A-91/07874 beschrieben sind;
   - Derivate der Dichlorphenylpyrazolcarbonsäure (d.h. der Formel (S-II), worin W = (W2) und (R¹⁷)_{n'} = 2,4-Cl₂ ist), vorzugsweise Verbindungen wie 1-(2,4-Dichlorphenyl)-5-methyl-pyrazol-3-carbonsäureethylester (II-2), 1-(2,4-Dichlorphenyl)-5-isopropyl-pyrazol-3-carbonsäureethylester (II-3), 1-(2,4-Dichlorphenyl)-5-(1,1-dimethyl-ethyl)pyrazol-3-carbonsäureethylester (II-4), 1-(2,4-Dichlorphenyl)-5-phenyl-pyrazol-3-carbonsäureethylester (II-5) und verwandte Verbindungen, wie sie in EP-A-0333131 und EP-A-0269806 beschrieben sind;
   - Verbindungen vom Typ der Triazolcarbonsäuren (d.h. der Formel (S-II), worin W = (W3) und (R¹⁷)_{n'} = 2,4-Cl₂ ist), vorzugsweise Verbindungen wie Fenchlorazolethyl, d.h. 1-(2,4-Dichlorphenyl)-5-trichlormethyl-(1 H)-1,2,4-triazol-3-carbonsäureethylester (II-6), und verwandte Verbindungen (siehe EP-A-0174562 und EP-A-0346620);
   - Verbindungen vom Typ der 5-Benzyl- oder 5-Phenyl-2-isoxazolin-3-carbonsäure oder der 5,5-Diphenyl-2-isoxazolin-3-carbonsäure wie Isoxadifen (II-12), (worin W = (W4) ist), vorzugsweise Verbindungen wie 5-(2,4-Dichlorbenzyl)-2-isoxazolin-3-carbonsäureethylester (II-7) oder 5-Phenyl-2-isoxazolin-3-carbonsäureethylester (II-8) und verwandte Verbindungen, wie sie in WO-A-91/08202 beschrieben sind, oder der 5,5-Diphenyl-2-isoxazolin-carbonsäureethylester (II-9, Isoxadifen-ethyl) oder -n-propylester (II-10) oder der 5-(4-Fluorphenyl)-5-phenyl-2-isoxazolin-3-carbonsäureethylester (II-11), wie sie in der WO-A-95/07897 beschrieben sind.
   - Verbindungen vom Typ der 8-Chinolinoxyessigsäure, z.B. solche der Formel (S-III), worin (R¹⁹)_{n'} = 5-Cl, R²⁰ = OR²⁴ und T = CH₂ ist, vorzugsweise die Verbindungen (5-Chlor-8-chinolinoxy)essigsäure-(1-methylhexyl)-ester (III-1, Cloquintocet-mexyl), (5-Chlor-8-chinolinoxy)essigsäure-(1,3-dimethyl-but-1-yl)-ester (III-2), (5-Chlor-8-chinolinoxy)essigsäure-4-allyl-oxy-butylester (III-3), (5-Chlor-8-chinolinoxy)essigsäure-1-allyloxy-prop-2-ylester (III-4), (5-Chlor-8-chinolinoxy)essigsäureethylester (III-5), (5-Chlor-8-chinolinoxy)essigsäuremethylester (III-6), (5-Chlor-8-chinolinoxy)essigsäureallylester (III-7), (5-Chlor-8-chinolinoxy)essigsäure-2-(2-propyliden-iminoxy)-1-ethylester (III-8), (5-Chlor-8-chinolinoxy)essigsäure-2-oxo-prop-1-ylester (III-9), (5-Chlor-8-chinolinoxy)essigsäure (III-10) und dessen Salze wie sie z.B. in der WO-A-02/34048 beschrieben sind, und verwandte Verbindungen, wie sie in EP-A-0860750, EP-A-0094349 und EP-A-0191736 oder EP-A-0492366 beschrieben sind.
   - Verbindungen vom Typ der (5-Chlor-8-chinolinoxy)-malonsäure, d.h. der Formel (S-III), worin (R¹⁹)_{n'} = 5-Cl, R²⁰= OR²⁴, T = -CH(COO-Alkyl)- ist, vorzugsweise die Verbindungen (5-Chlor-8-chinolinoxy)-malonsäure-diethylester (III-11), (5-Chlor-8-chinolinoxy)-malonsäurediallylester, (5-Chlor-8-chinolinoxy)-malonsäure-methyl-ethylester und verwandte Verbindungen, wie sie in EP-A-0582198 beschrieben sind.
   - Verbindungen vom Typ der Dichloracetamide, d.h. der Formel (S-IV), vorzugsweise: N,N-Diallyl-2,2-dichloracetamid (Dichlormid (IV-1), aus US 4,137,070), 4-Dichloracetyl-3,4-dihydro-3-methyl-2H-1,4-benzoxazin (IV-2, Benoxacor, aus EP 0149974), N1,N2-Diallyl-N2-dichloracetylglycinamid (DKA-24 (IV-3), aus HU 2143821), 4-Dichloracetyl-1-oxa-4-aza-spiro[4,5]decan (AD-67), 2,2-Dichlor-N-(1,3-dioxolan-2-ylmethyl)-N-(2-propenyl)acetamid (PPG-1292), 3-Dichloracetyl-2,2,5-trimethyloxazolidin (R-29148, IV-4), 3-Dichloracetyl-2,2-dimethyl-5-phenyloxazolidin, 3-Dichloracetyl-2,2-dimethyl-5-(2-thienyl)oxazolidin, 3-Dichloracetyl-5-(2-furanyl)-2,2-dimethyloxazolidin (Furilazole (IV-5), MON 13900), 1-Dichloracetyl-hexahydro-3,3,8a-trimethylpyrrolo[1,2-a]pyrimidin-6(2H)-on (Dicyclonon, BAS 145138),
b) eine oder mehreren Verbindungen aus Gruppe:
   1,8-Naphthalsäureanhydrid, Methyl-diphenylmethoxyacetat, 1-(2-Chlorbenzyl)-3-(1-methyl-1-phenylethyl)harnstoff (Cumyluron), O,O-Diethyl S-2-ethylthioethyl phosphordithioat (Disulfoton), 4-Chlorphenyl-methylcarbamat (Mephenate), O,O-Diethyl-O-phenylphosphorotioat (Dietholate), 4-Carboxy-3,4-dihydro-2H-1-benzopyran-4-essigsäure (CL-304415, CAS-Regno: 31541-57-8), Cyanomethoxyimino(phenyl)acetonitril (Cyometrinil), 1,3-Dioxolan-2-ylmethoxyimino(phenyl)acetonitril (Oxabetrinil), 4'-Chlor-2,2,2-trifluoracetophenon-O-1,3-dioxolan-2-ylmethyloxim (Fluxofenim), 4,6-Dichlor-2-phenylpyrimidin (Fenclorim), Benzyl-2-chlor-4-trifluormethyl-1,3-thiazol-5-carboxylat (Flurazole), 2-Dichlormethyl-2-methyl-1,3-dioxolan (MG-191), N-(4-Methylphenyl)-N'-(1-methyl-1-phenylethyl)harnstoff (Dymron), (2,4-Dichlorphenoxy)essigsäure (2,4-D), (4-Chlorphenoxy)essigsäure, (R,S)-2-(4-Chlor-o-tolyloxy)propionsäure (Mecoprop), 4-(2,4-Dichlorphenoxy)buttersäure (2,4-DB), (4-Chlor-o-tolyloxy)essigsäure (MCPA), 4-(4-Chlor-o-tolyloxy)buttersäure, 4-(4-Chlorphenoxy)buttersäure, 3,6-Dichlor-2-methoxybenzoesäure (Dicamba), 1-(Ethoxycarbonyl)ethyl 3,6-dichlor-2-methoxybenzoat (Lactidichlor) sowie deren Salze und Ester, vorzugsweise (C₁-C₈);
c) N-Acylsulfonamide der Formel (S-V) und ihre Salze, 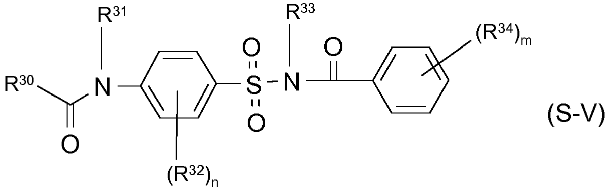 worin
   - R³⁰: Wasserstoff, einen Kohlenwasserstoffrest, einen Kohlenwasserstoffoxyrest, einen Kohlenwasserstoffthiorest oder einen Heterocyclylrest, der vorzugsweise über ein C-Atom gebunden ist, wobei jeder der letztgenannten 4 Reste unsubstituiert oder durch einen oder mehrere gleiche oder verschiedene Reste aus der Gruppe Halogen, Cyano, Nitro, Amino, Hydroxy, Carboxy, Formyl, Carbonamid, Sulfonamid und Reste der Formel -Z^{a}-R^{a} substituiert ist,
   wobei jeder Kohlenwasserstoffteil vorzugsweise 1 bis 20 C-Atome aufweist und ein C-haltiger Rest R³⁰ inklusive Substituenten vorzugsweise 1 bis 30 C-Atome aufweist;
   - R³¹: Wasserstoff oder (C₁-C₄)-Alkyl, vorzugsweise Wasserstoff, oder
   - R³⁰ und R³¹: zusammen mit der Gruppe der Formel -CO-N- den Rest eines 3- bis 8-gliedrigen gesättigten oder ungesättigten Rings;
   - R³²: gleich oder verschieden Halogen, Cyano, Nitro, Amino, Hydroxy, Carboxy, Formyl, CONH₂, SO₂NH₂ oder einen Rest der Formel -Z^{b}-R^{b} ;
   - R³³: Wasserstoff oder (C₁-C₄)-Alkyl, vorzugsweise H;
   - R³⁴: gleich oder verschieden Halogen, Cyano, Nitro, Amino, Hydroxy, Carboxy, CHO, CONH₂, SO₂NH₂ oder einen Rest der Formel -Z^{c}-R^{c} ;
   - R^{a}: einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
   - R^{b},R^{c}: gleich oder verschieden einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Phosphoryl, Halogen-(C₁-C₄)-alkoxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
   - Z^{a}: eine divalente Gruppe der Formel -O-, -S-, -CO-, -CS-, -CO-O-, -CO-S-, -O-CO-, -S-CO-, -SO-, -SO₂-, -NR*-, -CO-NR*-, -NR*-CO-, -SO₂-NR* oder -NR*-SO₂-, wobei die rechts angegebene Bindung der jeweiligen divalenten Gruppe die Bindung zum Rest R^{a} ist und wobei die R* in den letztgenannten 5 Resten unabhängig voneinander jeweils H, (C₁-C₄)-Alkyl oder Halo-(C₁-C₄)-alkyl bedeuten;
   - Z^{b}, Zc: unabhängig voneinander eine direkte Bindung oder eine divalente Gruppe der Formel -O-, -S-, -CO-, -CS-, -CO-O-, -CO-S-, -O-CO-, -S-CO-, -SO-, -SO₂-, -nur*-, -SO₂-NR*- -NR*-SO₂- -CO-NR*-oder -NR*-CO-, wobei die rechts angegebene Bindung der jeweiligen divalenten Gruppe die Bindung zum Rest R^{b} bzw. R^{c} ist und wobei die R* in den letztgenannten 5 Resten unabhängig voneinander jeweils H, (C₁-C₄)-Alkyl oder Halo-(C₁-C₄)-alkyl bedeuten;
   - n: eine ganze Zahl von 0 bis 4, vorzugsweise 0, 1 oder 2, insbesondere 0 oder 1, und
   - m: eine ganze Zahl von 0 bis 5, vorzugsweise 0, 1, 2 oder 3, insbesondere 0, 1 oder 2; bedeuten;
   vorzugsweise Safener von Verbindungen der Formel (S-V), worin
   - R³⁰ = H₃C-O-CH₂-, R³¹ = R³³ = H, R³⁴ = 2-OMe ist (V-1),
   - R³⁰ = H₃C-O-CH₂-, R³¹ = R³³ = H, R³⁴ = 2-OMe-5-Cl ist (V-2),
   - R³⁰ = Cyclopropyl, R³¹ = R³³ = H, R³⁴ = 2-OMe ist (V-3),
   - R³⁰ = Cyclopropyl, R³¹ = R³³ = H, R³⁴ = 2-OMe-5-Cl ist (V-4),
   - R³⁰ = Cyclopropyl, R³¹ = R³³ = H, R³⁴ = 2-Me ist (V-5),
   - R³⁰ = tert. Butyl, R³¹ = R³³ = H, R³⁴ = 2-OMe ist (V-6).
d) Acylsulfamoylbenzoesäureamide der allgemeinen Formel (S-VI), gegebenenfalls auch in Salzform, 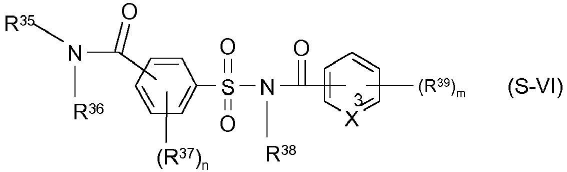 worin
   - X³: CH oder N;
   - R³⁵: Wasserstoff, Heterocyclyl oder einen Kohlenwasserstoffrest, wobei die beiden letztgenannten Reste gegebenenfalls durch einen oder mehrere, gleiche oder verschiedene Reste aus der Gruppe Halogen, Cyano, Nitro, Amino, Hydroxy, Carboxy, CHO, CONH₂, SO₂NH₂ und Z^{a}-R^{a} substituiert sind;
   - R³⁶: Wasserstoff, Hydroxy, (C₁-C₆)-Alkyl, (C₂-C₆)-Alkenyl, (C₂-C₆)-Alkinyl, (C₁-C₆)-Alkoxy, (C₂-C₆)-Alkenyloxy, wobei die fünf letztgenannten Reste gegebenenfalls durch einen oder mehrere, gleiche oder verschiedene Reste aus der Gruppe Halogen, Hydroxy, (C₁-C₄)-Alkyl, (C₁-C₄)-Alkoxy und (C₁-C₄)-Alkylthio substituiert sind, oder
   - R³⁵ und R³⁶: zusammen mit dem sie tragenden Stickstoffatom einen 3- bis 8-gliedrigen gesättigten oder ungesättigten Ring;
   - R³⁷: Halogen, Cyano, Nitro, Amino, Hydroxy, Carboxy, CHO, CONH₂, SO₂NH₂ oder Z^{b}-R^{b};
   - R³⁸: Wasserstoff, (C₁-C₄)-Alkyl, (C₂-C₄)-Alkenyl oder (C₂-C₄)-Alkinyl;
   - R³⁹: Halogen, Cyano, Nitro, Amino, Hydroxy, Carboxy, Phosphoryl, CHO, CONH₂, SO₂NH₂ oder Z^{c}-R^{c};
   - R^{a}: einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Mono- und Di-[(C₁-C₄)-alkyl]-amino substituiert sind;
   - R^{b}, R^{c}: gleich oder verschieden einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Phosphoryl, (C₁-C₄)-Haloalkoxy, Mono- und Di-[(C₁-C₄)-alkyl]-amino substituiert sind;
   - Z^{a}: eine divalente Einheit aus der Gruppe O, S, CO, CS, C(O)O, C(O)S, SO, SO₂, NR^{d}, C(O)NR^{d} oder SO₂NR^{d};
   - Z^{b}, Z^{c}: gleich oder verschieden eine direkte Bindung oder eine divalente Einheit aus der Gruppe O, S, CO, CS, C(O)O, C(O)S, SO, SO₂, NR^{d}, SO₂NR^{d} oder C(O)NR^{d};
   - R^{d}: Wasserstoff, (C₁-C₄)-Alkyl oder (C₁-C₄)-Haloalkyl,
   - n: eine ganze Zahl von 0 bis 4, und
   - m: für den Fall, dass X für CH steht, eine ganze Zahl von 0 bis 5, und für den Fall, dass X für N steht, eine ganze Zahl von 0 bis 4 bedeuten;
   vorzugsweise Safener von Verbindungen der Formel (S-VI), in der
   - X³: CH;
   - R³⁵: Wasserstoff, (C₁-C₆)-Alkyl, (C₃-C₆)-Cycloalkyl, (C₂-C₆)-Alkenyl, (C₅-C₆)-Cycloalkenyl, Phenyl oder 3- bis 6-gliedriges Heterocyclyl mit bis zu drei Heteroatomen aus der Gruppe Stickstoff, Sauerstoff und Schwefel, wobei die sechs letztgenannten Reste gegebenenfalls durch einen oder mehrere, gleiche oder verschiedene Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
   - R³⁶: Wasserstoff, (C₁-C₆)-Alkyl, (C₂-C₆)-Alkenyl, (C₂-C₆)-Alkinyl, wobei die drei letztgenannten Reste gegebenenfalls durch einen oder mehrere, gleiche oder verschiedene Substituenten aus der Gruppe Halogen, Hydroxy, (C₁-C₄)-Alkyl, (C₁-C₄)-Alkoxy und (C₁-C₄)-Alkylthio substituiert sind;
   - R³⁷: Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
   - R³⁸: Wasserstoff;
   - R³⁹: Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl;
   - n: 0, 1 oder 2 und
   - m: 1 oder 2 bedeuten.
e) Verbindungen von Typ der Acylsulfamoylbenzoesäureamide, z.B. der nachfolgenden Formel (S-VII), die z.B. bekannt sind aus WO-A-99/16744, 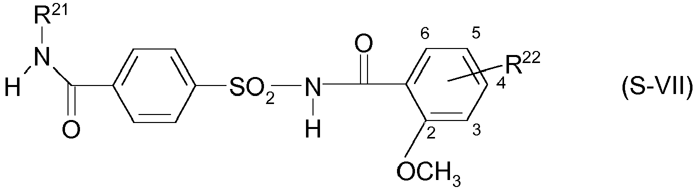 vorzugsweise Safener der Formel (S-VII), worin
   - R²¹: = Cyclo-Propyl und R²² = H ist (S3-1 = 4-Cyclopropylaminocarbonyl-N-(2-methoxybenzoyl)benzolsulfonamid),
   - R²¹: = Cyclo-Propyl und R²² = 5-CI ist (S3-2),
   - R²¹: = Ethyl und R²² = H ist (S3-3),
   - R²¹: = iso-Propyl und R²² = 5-CI ist (S3-4) und
   - R²¹: = iso-Propyl und R²² = H ist (S3-5 = 4-iso-propylaminocarbonyl-N-(2-methoxybenzoyl)benzolsulfonamid);
f) Verbindungen vom Typ der N-Acylsulfamoylphenylharnstoffe der Formel (S-VIII), die z.B. bekannt sind aus der EP-A-365484, 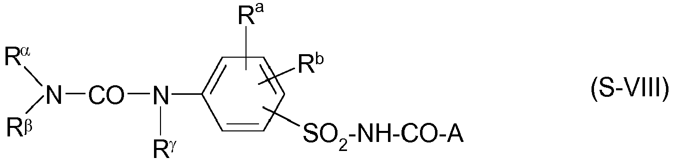 worin
   - A: für einen Rest aus der Gruppe 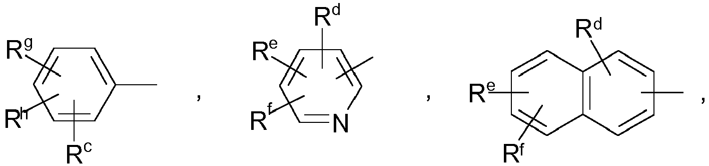 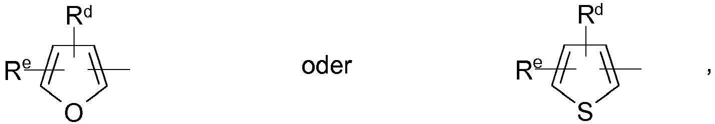
   - R^{α} und R^{β}: unabhängig voneinander für Wasserstoff, C₁-C₈-Alkyl, C₃-C₈-Cycloalkyl, C₃-C₆-Alkenyl, C₃-C₆-Alkinyl, 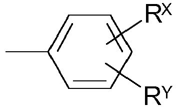 oder durch C₁-C₄-Alkoxy oder 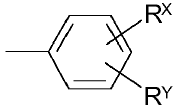 substituiertes C₁-C₄-Alkoxy, oder
   - R^{α} und R^{β}: gemeinsam für eine C₄-C₆-Alkylenbrücke oder eine durch Sauerstoff, Schwefel, SO, SO₂, NH oder -N(C₁-C₄-Alkyl)- unterbrochene C₄-C₆-Alkylenbrücke,
   - R^{γ}: für Wasserstoff oder C₁-C₄-Alkyl,
   - R^{a} und R^{b}: unabhängig voneinander für Wasserstoff, Halogen, Cyan, Nitro, Trifluormethyl, C₁-C₄-Alkyl, C₁-C₄-Alkoxy, C₁-C₄-Alkylthio, C₁-C₄-Alkylsulfinyl, C₁-C₄-Alkylsulfonyl, -COOR^{j}, -CONR^{k}R^{m}, -CORⁿ, -SO₂NR^{k}R^{m} oder -OSO₂-C₁-C₄-Alkyl, oder R^{a} und R^{b} gemeinsam für eine C₃-C₄-Alkylenbrücke, die durch Halogen oderC₁-C₄-Alkyl substituiert sein kann, oder eine C₃-C₄-Alkenylenbrücke, die durch Halogen oder C₁-C₄-Alkyl substituiert sein kann, oder eine C₄-Alkadienylenbrücke, die durch Halogen oder C₁-C₄-Alkyl substituiert sein kann, und
   - R⁹ und R^{h}: unabhängig voneinander für Wasserstoff, Halogen, C₁-C₄-Alkyl, Trifluormethyl, Methoxy, Methylthio oder -COOR^{j} stehen, wobei
   - R^{c}: Wasserstoff, Halogen, C₁-C₄-Alkyl oder Methoxy,
   - R^{d}: Wasserstoff, Halogen, Nitro, C₁-C₄-Alkyl, C₁-C₄-Alkoxy, C₁-C₄-Alkylthio, C₁-C₄-Alkylsulfinyl, C₁-C₄-Alkylsulfonyl, -COOR^{j} oder -CONR^{k}R^{m},
   - R^{e}: Wasserstoff, Halogen, C₁-C₄-Alkyl, -COOR^{j}, Trifluormethyl oder Methoxy, oder R^{d} und R^{e} gemeinsam für eine C₃-C₄-Alkylenbrücke,
   - R^{f}: Wasserstoff, Halogen oder C₁-C₄-Alkyl,
   - R^{X} und R^{Y}: unabhängig voneinander Wasserstoff, Halogen, C₁-C₄-Alkyl, C₁-C₄-Alkoxy, C₁-C₄-Alkylthio, -COOR⁴, Trifluormethyl, Nitro oder Cyan,
   - R^{j}, R^{k} und R^{m}: unabhängig voneinander Wasserstoff oder C₁-C₄-Alkyl,
   - R^{k} und R^{m}: gemeinsam eine C₄-C₆-Alkylenbrücke oder eine durch Sauerstoff, NH oder -N(C₁-C₄-Alkyl)- unterbrochene C₄-C₆-Alkylenbrücke, und
   - Rⁿ: C₁-C₄-Alkyl, Phenyl oder durch Halogen, C₁-C₄-Alkyl, Methoxy, Nitro oder Trifluormethyl substituiertes Phenyl bedeuten;
   vorzugsweise Safener der Formel (S-VIII) sind
   1-[4-(N-2-Methoxybenzoylsulfamoyl)phenyl]-3-methylharnstoff,
   1-[4-(N-2-Methoxybenzoylsulfamoyl)phenyl]-3,3-dimethylharnstoff,
   1-[4-(N-4,5-Dimethylbenzoylsulfamoyl)phenyl]-3-methylharnstoff,
   1-[4-(N-Naphthoylsulfamoyl)phenyl]-3,3-dimethylharnstoff,
   einschließlich der Stereoisomeren und der in der Landwirtschaft gebräuchlichen Salze.

Sofern es im Einzelnen nicht anders definiert wird, gelten für die Reste in den Formeln zu (S-I) bis (S-VIII) im Allgemeinen die folgenden Definitionen.
Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein.
Alkylreste, auch in den zusammengesetzten Bedeutungen wie Alkoxy, Haloalkyl usw. haben vorzugsweise 1 bis 4 C-Atome und, bedeuten z.B. Methyl, Ethyl, n- oder i-Propyl, n-, i-, t- oder 2-Butyl. Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B. Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.
Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.
Halogen bedeutet Fluor, Chlor, Brom oder lod. Haloalkyl, Haloalkenyl und Haloalkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. CF₃, CHF₂, CH₂F, CF₂CF₃, CH₂CHFCl, CCl₃, CHCl₂, CH₂CH₂Cl. Haloalkoxy ist z.B. OCF₃, OCHF₂, OCH₂F, OCF₂CF₃, OCH₂CF₃ und OCH₂CH₂Cl. Entsprechendes gilt für sonstige Halogen substituierte Reste.
Ein Kohlenwasserstoffrest kann ein aromatischer oder ein aliphatischer Kohlenwasserstoffrest sein, wobei ein aliphatischer Kohlenwasserstoffrest im allgemeinen ein geradkettiger oder verzweigter gesättigter oder ungesättigter Kohlenwasserstoffrest ist, vorzugsweise mit 1 bis 18, besonders bevorzugt 1 bis 12 C-Atomen, z.B. Alkyl, Alkenyl oder Alkinyl.
Vorzugsweise bedeutet aliphatischer Kohlenwasserstoffrest Alkyl, Alkenyl oder Alkinyl mit bis zu 12 C-Atomen; entsprechendes gilt für einen aliphatischen Kohlenwasserstoffrest in einem Kohlenwasserstoffoxyrest.
Aryl ist im allgemeinen ein mono-, bi- oder polycyclisches aromatisches System mit vorzugsweise 6-20 C-Atomen, bevorzugt 6 bis 14 C-Atomen, besonders bevorzugt 6 bis 10 C-Atomen, z.B. Phenyl, Naphthyl, Tetrahydronaphthyl, Indenyl, Indanyl, Pentalenyl und Fluorenyl, besonders bevorzugt Phenyl.
Heterocyclischer Ring, heterocyclischer Rest oder Heterocyclyl bedeutet ein mono-, bi- oder polycyclisches Ringsystem, das gesättigt, ungesättigt und/oder aromatisch ist und eine oder mehrere, vorzugsweise 1 bis 4, Heteroatome, vorzugsweise aus der Gruppe N, S und O, enthält.

Bevorzugt sind gesättigte Heterocyclen mit 3 bis 7 Ringatomen und einem oder zwei Heteroatomen aus der Gruppe N, O und S, wobei die Chalcogene nicht benachbart sind. Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran.
Bevorzugt sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 bis 6 Ringatomen und einem Heteroatom aus der Gruppe N, O und S. Ganz besonders bevorzugte teilweise ungesättigte Heterocyclen sind Pyrazolin, Imidazolin und Isoxazolin. Ebenso bevorzugt ist Heteroaryl, z.B. mono- oder bicyclische aromatische Heterocyclen mit 5 bis 6 Ringatomen, die ein bis vier Heteroatome aus der Gruppe N, O, S enthalten, wobei die Chalcogene nicht benachbart sind. Besonders bevorzugt sind monocyclische aromatische Heterocyclen mit 5 bis 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und Isoxazol. Ganz besonders bevorzugt sind Pyrazol, Thiazol, Triazol und Furan.
Substituierte Reste, wie substituierte Kohlenwasserstoffreste, z.B. substituiertes Alkyl, Alkenyl, Alkinyl, Aryl wie Phenyl und Arylalkyl wie Benzyl, oder substituiertes Heterocyclyl, bedeuten einen vom unsubstituierten Grundkörper abgeleiteten substituierten Rest, wobei die Substituenten vorzugsweise einen oder mehrere, vorzugsweise 1, 2 oder 3, im Falle von Cl und F auch bis zur maximal möglichen Anzahl, Substituenten aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Substituenten entsprechende ungesättigte aliphatische Substituenten, vorzugsweise Alkenyl, Alkinyl, Alkenyloxy, Alkinyloxy, bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor oder Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.
Mono- oder disubstituiertes Amino bedeutet einen chemisch stabilen Rest aus der Gruppe der substituierten Aminoreste, welche beispielsweise durch einen oder zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-Arylamino sowie N-Heterocyclen. Dabei sind Alkylreste mit 1 bis 4 C-Atomen bevorzugt. Aryl ist dabei vorzugsweise Phenyl. Substituiertes Aryl ist dabei vorzugsweise substituiertes Phenyl. Für Acyl gilt dabei die weiter unten genannte Definition, vorzugsweise (C₁-C₄)Alkanoyl. Entsprechendes gilt für substituiertes Hydroxylamino oder Hydrazino.
Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)Alkyl, (C₁-C₄)Alkoxy, (C₁-C₄)Haloalkyl, (C₁-C₄)Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.
Ein Acylrest bedeutet den Rest einer organischen Säure mit vorzugsweise bis zu 6 C-Atomen, z.B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestern, gegebenenfalls N-substituierter Carbaminsäuren, Sulfonsäuren, Sulfinsäuren, Phosphonsäuren, Phosphinsäuren. Acyl bedeutet beispielsweise Formyl, Alkylcarbonyl, wie (C₁-C₄-Alkyl)-carbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkylsulfonyl, Alkylsulfinyl oder N-Alkyl-1-iminoalkyl.

Von den Formeln (S-II) bis (S-VIII) umfasst sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Die Verbindungen der Formel (S-II) sind z.B. aus EP-A-0333131 (ZA-89/1960), EP-A-0269806 (US 4,891,057), EP-A-0346620 (AU-A-89/34951), EP-A-0174562, EP-A-0346620 (WO-A-91/08202), WO-A-91/07874 oder WO-A-95/07897 (ZA 94/7120) und der dort zitierten Literatur bekannt oder können nach oder analog den dort beschriebenen Verfahren hergestellt werden. Die Verbindungen der Formel (S-III) sind aus EP-A-0086750, EP-A-094349 (US 4,902,340), EP-A-0191736 (US 4,881,966) und EP-A-0492366 und dort zitierter Literatur bekannt oder können nach oder analog den dort beschriebenen Verfahren hergestellt werden. Einige Verbindungen sind ferner in EP-A-0582198 und WO-A-02/34048 beschrieben. Die Verbindungen der Formel (S-IV) sind aus zahlreichen Patentanmeldungen bekannt, beispielsweise US 4,021,224 und US 4,021,229. Verbindungen der Untergruppe b) sind weiterhin aus CN-A-87/102789, EP-A-365484 sowie aus "The Pesticide Manual", 11. Auflage, British Crop Protection Council and the Royal Society of Chemistry (1997), bekannt. Die Verbindungen der Untergruppe c) sind in der WO-A-97/45016, die der Untergruppe d) in der WO-A-99/16744 und die der Untergruppe e) in der EP-A-365484 beschrieben. Die zitierten Schriften enthalten ausführliche Angaben zu Herstellungsverfahren und Ausgangsmaterialien und nennen bevorzugte Verbindungen. Auf diese Schriften wird ausdrücklich Bezug genommen, sie gelten durch Zitat als Bestandteil dieser Beschreibung.

Besonders bevorzugt kommen als Safener (Komponente e), die gegebenenfalls in den erfindungsgemäßen Formulierungen enthalten sein können, unter anderem in Frage: 4-Dichloracetyl-1-oxa-4-aza-spiro[4.5]-decan (AD-67), 1-Dichloracetyl-hexahydro-3,3,8a-trimethylpyrrolo[1,2-a]-pyrimidin-6(2H)-on (Dicyclonon, BAS-145138), 4-Dichloracetyl-3,4-dihydro-3-methyl-2H-1,4-benzoxazin (Benoxacor), 5-Chlor-chinolin-8-oxy-essigsäure-(1-methyl-hexylester) (Cloquintocet-mexyl), α-(Cyanomethoxyimino)-phenylacetonitril (Cyometrinil), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methyl-phenyl)-N'-(1-methyl-1-phenyl-ethyl)-harnstoff (Dymron), 4,6-Dichlor-2-phenyl-pyrimidin (Fenclorim), 1-(2,4-Dichlorphenyl)-5-trichlormethyl-1H-1,2,4-triazol-3-carbonsäure-ethylester (Fenchlorazolethyl), 2-Chlor-4-trifluormethyl-thiazol-5-carbonsäure-phenylmethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1 H-pyrazol-3,5-dicarboxylat (Mefenpyr-diethyl), 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyl-oxazolidin (R-29148), 1-(2-Chlor-phenyl)-5-phenyl-1 H-pyrazol-3-carbonsäure-methylester, 4-Cyclopropylaminocarbonyl-N-(2-methoxybenzoyl)benzolsulfonamid, 4-iso-propylaminocarbonyl-N-(2-methoxybenzoyl)benzolsulfonamid und N-(2-Methoxy-benzoyl)-4-[(methylamino-carbonyl)-amino]-benzolsulfonamid.

Ganz besonders bevorzugt sind Mefenpyr-diethyl, Isoxadifen-ethyl, 4-Cyclopropylaminocarbonyl-N-(2-methoxybenzoyl)benzolsulfonamid, 4-iso-propylaminocarbonyl-N-(2-methoxybenzoyl)benzolsulfonamid, insbesondere bevorzugt ist Mefenpyr-diethyl.

Der Anteil der Safener (Komponente e), die gegebenenfalls in den erfindungsgemäßen Formulierungen enthalten sein können, kann 0,01 - 50 Gew.-%, bevorzugt 0,1 - 40 Gew.-%, besonders bevorzugt 5 - 20 Gew.-% betragen.

Bei der Verwendung von Safener, die gegebenenfalls in den erfindungsgemäßen Formulierungen enthalten sein können, werden gegebenenfalls spezielle Lösungsmittel (Komponente e-1), Emulgatoren (Komponente e-2) und Trägermaterialien (Komponente e-3) verwendet.

Geeignete Lösungsmittel (Komponente e-1) hierfür können ausgewählt werden aus der Gruppe der aromatischen und aliphatischen Kohlenwasserstoffe, Typische Vertreter geeigneter Lösungsmittel sind unter anderem ^{®}Solvesso-Typen (aromatischer Kohlenwasserstoff), ^{®}Essobayol (aliphatischer Kohlenwasserstoff), Bevorzugt sind Lösungsmittel aus der Gruppe der aromatischen und aliphatischen Kohlenwasserstoffe, wie z.B. ^{®}Solvesso-Typen (aromatische Kohlenwasserstoffe), besonders bevorzugt aromatische Kohlenwasserstoffe, wie ^{®}Solvesso 200 ND (alkyliertes Naphthalin).
Der Anteil der für die Safener-Zugabe gegebenenfalls benötigten Lösungsmittel (Komponente e-1) in den erfindungsgemäßen Formulierungen kann 0,01 - 50 Gew.-%, bevorzugt 0,5 - 40 Gew.-%, besonders bevorzugt 5 - 20 Gew.-% betragen.

Geeignete Emulgatoren (Komponente e-2) sind Salze von alkylierten aromatischen Sulfonsäuren, mit alkylierten Copolymerisaten ausEthylen- und Propylenoxid (EO/PO), Besonders bevorzugt sind Kombinationen aus Salzen der Dodecylbenzolsulfonsäure, wie ^{®}Calsogen AR 100 mit alkyliertem Copolymerisat aus Ethylen- und Propylenoxid, wie ^{®}Emulsogen 3510.
Der Anteil der für die Safener-Zugabe gegebenenfalls benötigten Emulgatoren (Komponente e-2) in den erfindungsgemäßen Formulierungen kann 0,01 - 25 Gew.-%, bevorzugt 0,5 - 10 Gew.-%, besonders bevorzugt 1 - 5 Gew.-% betragen.

Geeignete Trägermaterialien (Komponente e-3) hierfür können ausgewählt werden aus der Gruppe der hochsaugfähigen Träger gekennzeichnet durch eine Aufnahmefähigkeit von wenigstens 200 g Dibutylphthalat pro 100 g Trägermaterial. Typische Vertreter geeigneter Trägermaterialien sind unter anderem ^{®}Calflo E (Calcium-Silikat) und ^{®}Sipernat-Typen (synthetische Fällungskieselsäure von hoher Saugfähigkeit).
Bevorzugt sind Calcium-Silikat, wie ^{®}Calflo E, und Fällungskieselsäure, wie ^{®}Sipernat 50S.
Der Anteil der für die Safener-Zugabe gegebenenfalls benötigten Trägermaterialien (Komponente e-3) in den erfindungsgemäßen Formulierungen kann 0,5 - 30 Gew.-%, bevorzugt 1 - 20 Gew.-%, besonders bevorzugt 4 - 10 Gew.-% betragen.

Die Erfindung betrifft weiterhin ein herbizides Mittel, welches aus den erfindungsgemäßen Formulierungen durch Verdünnen mit Flüssigkeiten, bevorzugt Wasser, hergestellt werden kann.

Es kann vorteilhaft sein, den so erhaltenen herbiziden Mitteln weitere Wirkstoffe, bevorzugt agrochemische Wirkstoffe (z.B. als Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche Mittel, bevorzugt herbizide, auf Basis der erfindungsgemäßen Formulierungen.

Eine besondere Ausführungsform der Erfindung betrifft die Verwendung der aus den erfindungsgemäßen Formulierungen erhältlichen herbiziden Mittel zur Bekämpfung von unerwünschtem Pflanzenwuchs, im Folgenden als "herbizides Mittel" bezeichnet.

Die herbiziden Mittel weisen eine ausgezeichnete herbizide Wirksamkeit gegen ein breites Spektrum wirtschaftlich wichtiger mono- und dikotyler Schadpflanzen auf.

Auch schwer bekämpfbare perennierende Unkräuter, die aus Rhizomen, Wurzelstöcken oder anderen Dauerorganen austreiben, werden gut erfasst. Dabei können die herbiziden Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt. Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp., Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den herbiziden Mitteln ebenfalls hervorragend bekämpft.

Werden die herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die herbiziden Mittel zeichnen sich durch eine schnell einsetzende und lang andauernde herbizide Wirkung aus. Die Regenfestigkeit der Wirkstoffe in den herbiziden Mitteln ist in der Regel günstig. Als besonderer Vorteil fällt ins Gewicht, dass die in den herbiziden Mittel verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen herbiziden Mittel hinsichtlich der beschriebenen Eigenschaften deutlich übertroffen.

Obgleich die herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die entsprechenden herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die herbiziden Mittel in Nutzpflanzenkulturen eingesetzt werden, welche gegenüber den phytotoxischen Wirkungen der Herbizide resistent sind bzw. gentechnisch resistent gemacht worden sind.

Bei der Anwendung der herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den weiteren herbiziden Wirkstoffen, gegenüber denen die transgene Kultur resistent ist, sowie Beeinflussung von Wuchs und Ertrag der transgenen Kulturpflanzen.

Gegenstand der vorliegenden Erfindung ist somit auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, dass dadurch gekennzeichnet ist, dass man die erfindungsgemäßen herbiziden Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Der Herstellungsprozess der erfindungsgemäßen Formulierungen kann aus einer Reihe von an sich bekannten Verfahren ausgewählt werden, welche die Herstellung von Festformulierungen, wie wasserdispergierbaren Pulvern (WP), Granulaten (WG), und hieraus herstellbarer Kompaktate, wie Schulpen, Tabletten usw., erlauben. Bevorzugt sind hieraus die Verfahren der Extrusions-, Pfannen- und Wirbelschicht-Granulierung, besonders bevorzugt die Wirbelschicht-Granulierung. Allen Verfahren ist gemeinsam, dass die einzelnen Komponenten in den jeweiligen, herstellungsbedingten Mengenverhältnissen zusammengebracht werden.
Die erfindungsgemäßen Formulierungen weisen eine ausgezeichnete chemische Stabilität während der Herstellung und Lagerung auf und eignen sich insbesondere auch für Kombinationen von Wirkstoffen mit unterschiedlichen physikalischchemischen Eigenschaften. Daneben weisen die erfindungsgemäßen Formulierungen eine ausgezeichnete physikalische Stabilität, eine gute Applizierbarkeit und Anwenderfreundlichkeit, sowie eine hohe biologische Effektivität und Selektivität auf.
Bei den erfindungsgemäßen Formulierungen liegt der pH-Wert, beispielsweise in 10%iger wässriger Lösung, in der Regel zwischen 7 und 8.
Insgesamt zeigen die erfindungsgemäßen Formulierungen die angestrebte Langzeit-Lagerstabilität und sind anwendungstechnisch einwandfrei.

### Beispiele

Die Beispiele sollen die Erfindung illustrieren.

### Herstellungsverfahren 1:

Die einzelnen Komponenten werden in den jeweiligen Mengenverhältnissen in Wasser gelöst bzw. dispergiert. Die entstandene Mischung wird mittels eines Wirbelschichtgranulators in wasserlösliche Granulate überführt, die nach der Granulierung noch einen vorher festgelegten Rest-Wassergehalt aufweisen.

### Herstellungsverfahren 2:

Die einzelnen Komponenten werden in den jeweiligen Mengenverhältnissen vermischt. Das entstandene Gemisch wird mittels Luftstrahlmühle fein vermahlen, und dann mit ca. 5% Wasser befeuchtet. Dieses angefeuchtete Material wird mittels eines Haubenextruders, beispielsweise Lochhaube mit Bohrungen von 0,5 - 0,8 mm Weite, einer Extrusionsgranulierung unterzogen. Die feuchten Granulate werden anschließend an der Luft getrocknet, bis sie einen vorher festgelegten Rest-Wassergehalt aufweisen.

Bei Herstellungsverfahren 2 werden beispielsweise Safener, als optionale Komponente (e), mit den ebenfalls optional zu verwendeten Lösungsmitteln (Komponente e-1) und Emulgatoren (Komponente e-2) auf das Trägermaterial (Komponente e-3) aufgetragen und als erster Verfahrensschritt ein rieselfähiges Absorbat hergestellt, dem dann die übrigen Formulierungs-Komponenten zugemischt werden.

Die in den Tabellen 1 und 2 gezeigten Beispiele wurden unter Verwendung des Herstellungsverfahren 2 hergestellt (Rest-Wassergehalt: ca. 1 Gew.-%).

**Beschreibung der in den Beispielen verwendeten Produkte:**

| | |
|---|---|
| Propoxycarbazon-methyl-natrium 95% | Wirkstoff (Phenylsulfonylaminocarbonyltriazolinone), Bayer CropScience |
| Iodosulfuron-methyl-natrium 91% | Wirkstoff (Phenylsulfonylharnstoffe), Bayer CropScience |
| Amidosulfuron-methyl-natrium 95% | Wirkstoff (sonstige Sulfonamide), Bayer CropScience |
| ^{®}Kaolin Tec 1 | Trägermaterial, gering saugfähig (Kaolin, Aluminiumhydrosilicat), Ziegler & Co. |
| ^{®}Harborlite 300 | Trägermaterial, gering saugfähig (Perlit), Lehmann & Voss |
| ^{®}Texapon K12 | Netzmittel, Typ Alkyl-Sulfat (Na-Laurylsulfat), Cognis |
| ^{®}Genapol X060-methyl | Netzmittel, Typ nichtionisches Alkylalkoxy (Tridecylalkoholethoxylat-methylether), Clariant - weitgehend analog ^{®}Lutensol ON 60 aus WO-A-98/34482 |
| ^{®}Hostapur OSB | Netzmittel, Typ Alkyl-Sulfonat (Na-alpha-Olefinsulfonat), Clariant - analog ^{®}Witconate 3202 aus WO-A-98/34482 |
| ^{®}Morwet EFW | Netzmittel, Typ Naphthalinsulfonsäure (Na-Naphthalinsulfonat, alkyliert), Akzo Nobel |

**Beschreibung der in den Beispielen verwendeten Produkte (Fortsetzung):**

| | |
|---|---|
| ^{®}Aerosol OTB | Netzmittel, Typ Sulfobernsteinsäure-Derivat (Na-Diisooctyl-Sulfosuccinat), Cytec - analog ^{®}Newkalgen EX-70 und ^{®}Geropon SDS aus EP-A-764404 |
| ^{®}Morwet D425 | Dispergator (Kondensationsprodukt aus Naphthalinsulfonsäure und Formaldehyd), Akzo Nobel |
| ^{®}Luviskol K30 | Bindemittel (Polyvinylpyrrolidon), BASF |
| ^{®}Wacker ASP 15 | Antischaum-Mittel Emulgator, anionisch (Polydimethylsiloxan, an festem Träger absorbiert), Wacker |
| Mefenpyr-diethyl 94% | Safener (Dichlorphenylpyrazolin-3-carbonsäure), Bayer CropScience |
| ^{®}Solvesso 200ND | Aromatisches Lösungsmittel (alkyliertes Naphthalin), Exxon |
| ^{®}Calsogen AR100 | Emulgator, anionisch (Ca-Dodecylbenzolsulfonat), Clariant |
| ^{®}Emulsogen 3510 | Emulgator, nichtionisch (alkyliertes EO/PO-Blockcopolymerisat), Clariant |
| ^{®}Sipernat 50S | Trägermaterial, hoch saugfähig (Fällungskieselsäure), Degussa |

**Tabelle 1: Beispiele 1 - 4 (Stand der Technik)**

| Komponente | Bezeichnung | 1 Gew.-% | 2 Gew.-% | 3 Gew.-% | 4 Gew.-% |
|---|---|---|---|---|---|
| (a) | Propoxycarbazon-methyl-natrium 95% | 17,68 | 17,68 | 17,68 | 14,74 |
| (a) | lodosulfuron-methyl-natrium 91 % | 1,10 | 1,10 | 1,10 | 0,91 |
| (a) | Amidosulfuron-methyl-natrium 95% | - | - | - | 6,69 |
| (b) | ^{®}Kaolin Tec 1 | 11,58 | 13,02 | 12,04 | 13,87 |
| (b) | ^{®}Harborlite 300 | 5,00 | 5,00 | 5,00 | 5,00 |
| analog (c) | ^{®}Texapon K12 | 12,00 | - | - | - |
| analog (c) | ^{®}Genapol X060-methyl | | 6,00 | - | 6,00 |
| analog (c) | ^{®}Hostapur OSB | - | - | 12,00 | - |
| (d) | ^{®}Morwet D425 | 10,00 | 10,00 | 10,00 | 10,00 |
| (d) | ^{®}Luviskol K30 | 5,00 | 5,00 | 5,00 | 2,00 |
| (d) | ^{®}Wacker ASP 15 | 1,00 | 1,00 | 1,00 | 1,00 |
| (e) | Mefenpyr-diethyl 94% | 8,51 | 8,51 | 8,51 | 7,10 |
| (e-1) | ^{®}Solvesso 200ND | 10,00 | 16,56 | 9,54 | 16,56 |
| (e-2) | ^{®}Calsogen AR100 | 2,63 | 2,63 | 2,63 | 2,63 |
| (e-2) | ^{®}Emulsogen 3510 | 1,50 | 1,50 | 1,50 | 1,50 |
| (e-3) | ^{®}Sipernat 50S | 14,00 | 12,00 | 14,00 | 12,00 |

Anmerkung: Tabelle 1 zeigt standardgemäße feste, wasserdispergierbare Formulierungen (Granulate, Beispiele 1 - 4) unter Verwendung von Netzmitteln (analog Komponente c) aus chemisch unterschiedlichen Gruppen, wie ^{®}Texapon K12 (Na-Laurylsulfat), ^{®}Genapol X060-methyl (Tridecylalkoholethoxylatmethylether) und ^{®}Hostapur OSB (Na-alpha-Olefinsulfonat), die in der Formulierung von Pflanzenschutzmittel sehr gebräuchlich sind (Stand der Technik).

**Tabelle 2: Beispiele 5-6 nicht erfindungsgemäß, Beipiele 7-8 erfindungsgemäß**

| Komponente | Bezeichnung | 5 Gew.-% | 6 Gew.-% | 7 Gew.-% | 8 Gew.-% |
|---|---|---|---|---|---|
| (a) | Propoxycarbazon-methyl-natrium 95% | 17,68 | 17,68 | 14,74 | 14,74 |
| (a) | lodosulfuron-methyl-natrium 91 % | 1,10 | 1,10 | 0,91 | 0,91 |
| (a) | Amidosulfuron-methyl-natrium 95% | - | - | 6,69 | 6,69 |
| (b) | ^{®}Harborlite 300 | 8,40 | 8,40 | - | - |
| (b) | ^{®}Kaolin Tec 1 | 25,63 | 22,63 | 34,49 | 31,49 |
| (c) | ^{®}Morwet EFW | 2,00 | - | 2,00 | - |
| (c) | ^{®}Aerosol OTB | - | 5,00 | - | 5,00 |
| (d) | ^{®}Morwet D425 | 15,00 | 15,00 | 15,00 | 15,00 |
| (d) | ^{®}Luviskol K30 | 5,00 | 5,00 | 5,00 | 5,00 |
| (d) | ^{®}Wacker ASP 15 | 1,00 | 1,00 | 1,00 | 1,00 |
| (e) | Mefenpyr-diethyl 94% | 8,51 | 8,51 | 7,10 | 7,10 |
| (e-1) | ^{®}Solvesso 200ND | 8,37 | 8,37 | 7,00 | 7,00 |
| (e-2) | ^{®}Calsogen AR100 | 0,53 | 0,53 | 0,44 | 0,44 |
| (e-2) | ^{®}Emulsogen 3510 | 0,76 | 0,76 | 0,63 | 0,63 |
| (e-3) | ^{®}Sipernat 50S | 6,02 | 6,02 | 5,00 | 5,00 |

Anmerkung: Tabelle 2 zeigt erfindungsgemäße feste, wasserdispergierbare Formulierungen.

In Tabelle 3 ist die jeweilige chemische Stabilität der in den Tabellen 1 (Stand der Technik) und 2 (Erfindungsgemäß) vorgestellten Formulierungen vergleichend zusammengefasst. Als Stabilitätskriterium dient jeweils der chemische Abbau bei den enthaltenen Sulfonamid-Wirkstoffen nach 2 Wochen Lagerung bei einer Temperatur von 54°C (Methode in Anlehnung an Verfahren CIPAC MT 46).

**Tabelle 3: Stabilität von Wirkstoffen aus der Gruppe der Sulfonamide**

| BSP-NR | Netzmittel | Abbau von Wirkstoffen aus der Gruppe der Sulfonamide in Abhängigkeit vom Netzmittel (Komponente c) | | | | | | | | |
|---|---|---|---|---|---|---|---|---|---|---|
| | | Propoxycarbazon-methyl-natrium | | | Iodosulfuron-methyl-natrium | | | Amidosulfuron-methyl-natrium | | |
| | | Start % | 2W 54°C % | Abbau rel. % | Start % | 2W 54°C % | Abbau rel. % | Start % | 2W 54°C % | Abbau rel. % |
| 1 | ^{®}Texapon K12 | 17,0 | 16,9 | 0,6 | 1,07 | 0,89 | 16,82 | - | - | - |
| 2 | ^{®}Genapol X060-methyl | 18,0 | 17,7 | 1,7 | 1,04 | 0,9 | 13,46 | - | - | - |
| 3 | ^{®}Hostapur OSB | 17,1 | 17 | 0,6 | 0,978 | 0,9 | 7,98 | - | - | - |
| 4 | ^{®}Genapol X060-methyl | 14,3 | 14,2 | 0,7 | 0,638 | 0,5 | 21,63 | 6,36 | 5,5 | 13,5 |
| 5 | ^{®}Morwet EFW | n.a. | n.a. | n.a. | n.a. | n.a. | n.a. | - | - | - |
| 6 | ^{®}Aerosol OTB | n.a. | n.a. | n.a. | n.a. | n.a. | n.a. | - | - | - |
| 7 | ^{®}Morwet EFW | 14,5 | 14,5 | 0 | 0,864 | 0,85 | 1,6 | 6,6 | 6,5 | 1,5 |
| 8 | ^{®}Aerosol OTB | 14,5 | 14,5 | 0 | 0,856 | 0,856 | 0 | 6,59 | 6,52 | 1,1 |

| | | | | | | | | | | |
|---|---|---|---|---|---|---|---|---|---|---|
| Abkürzungen: n.a. = nicht verfügbar; "BSP-NR" = Beispiel-Nummer (Zusammensetzung siehe Tabelle 1 und 2; "Start %" = Wirkstoffgehalt in Gew.-% zu Beginn des Lagerversuchs; "2W 54°C %" = Wirkstoffgehalt in Gew.-% nach 2 Wochen Lagerung bei 54°C; "Abbau rel. %" = chemischer Abbau bzgl. Wirkstoffgehalt zu Beginn des Lagerversuchs (= 100%). | | | | | | | | | | |

Aus den Daten in Tabelle 3 geht deutlich hervor, dass die Verwendung der erfindungsgemäßen Netzmittel (Beispiele 5 - 8) eine Stabilisierung von Wirkstoffen aus der Gruppe der Sulfonamide in Formulierungen bewirken im Vergleich zu den Netzmitteln des Standes der Technik (Beispiele 1 - 4).

## Patentansprüche

1. Feste, wasserdispergierbare Formulierung enthaltend:
(a) als Komponente (a), Propoxycarbazone-Methyl oder dessen Natriumsalz, Amidosulfuron-Methyl oder dessen Natriumsalz und lodosulfuron-Methyl oder dessen Natriumsalz enthalten,
(b) ein oder mehrere Trägermaterialien,
wobei
(c) ein oder mehrere Netzmittel aus der Gruppe der Salze der alkylierten Naphthalinsulfonsäuren und der Salze der Dioctylsulfobernsteinsäure verwendet werden.

2. Feste, wasserdispergierbare Formulierung gemäß einem oder mehreren der Anspruche 1, worin als Komponente (b) enthalten sind, Trägermaterialien aus der Gruppe der natürlichen Gerüstsilikate und der Calciumcarbonat-Typen.

3. Feste, wasserdispergierbare Formulierung gemäß einem der der Ansprüche 1 und 2, zusätzlich enthaltend als Komponente (d) weitere übliche Hilfs- und Zusatzstoffe.

4. Feste, wasserdispergierbare Formulierung gemäß Anspruch 3, worin als Komponente (d) enthalten sind, weitere übliche Hilfs- und Zusatzstoffe aus der Gruppe der Dispergatoren, Desintegrationsmittel, Antischaum-Mittel und Haftvermittler.

5. Feste, wasserdispergierbare Formulierung gemäß einem oder mehreren der Ansprüche 1 bis 4, zusätzlich enthaltend als Komponente (e) ein oder mehrere Safener.

6. Feste, wasserdispergierbare Formulierung gemäß Anspruch 5, worin als Komponente (e) enthalten sind, Safener aus der Gruppe Mefenpyr-diethyl, Isoxadifen-ethyl, 4-Cyclopropylaminocarbonyl-N-(2-methoxybenzoyl)benzolsulfonamid, 4-iso-propylaminocarbonyl-N-(2-methoxybenzoyl)benzolsulfonamid.

7. Feste, wasserdispergierbare Formulierung gemäß Anspruch 5 oder 6, enthaltend für die Safener-Zugabe gegebenenfalls benötigte Lösungsmittel (Komponente e-1) aus der Gruppe der aromatischen und aliphatischen Kohlenwasserstoffe.

8. Feste, wasserdispergierbare Formulierung gemäß einem oder mehreren der Ansprüche 5 bis 7, enthaltend für die Safener-Zugabe gegebenenfalls benötigte Emulgatoren (Komponente e-2) aus der Gruppe der Salze alkylierter aromatischer Sulfonsäuren mit alkylierten Copolymerisaten aus Ethylen- und Propylenoxid,.

9. Feste, wasserdispergierbare Formulierung gemäß einem oder mehreren der Ansprüche 5 bis 8, enthaltend für die Safener-Zugabe gegebenenfalls benötigte Trägermaterialien (Komponente e-3) aus der Gruppe der Calcium-Silikate und Fällungskieselsäuren.

10. Verfahren zur Herstellung einer festen, wasserdispergierbaren Formulierung gemäß einem oder mehreren der Ansprüche 1 bis 9, wobei die einzelnen Komponenten in den jeweiligen herstellungsbedingten Mengenverhältnissen zusammengebracht werden.

11. Verfahren zur Bekämpfung von Schadpflanzen, worin eine wirksame Menge einer festen, wasserdispergierbaren Formulierung gemäß einem oder mehreren der Ansprüche 1 bis 9 auf die Schadpflanzen, Teile der Pflanzen, Pflanzensamen, die Fläche auf der Pflanzen wachsen appliziert wird.

12. Verwendung einer festen, wasserdispergierbaren Formulierung gemäß einem oder mehreren der Ansprüche 1 bis 9, zur Bekämpfung von Schadpflanzen.

13. Verwendung einer festen, wasserdispergierbaren Formulierung gemäß einem oder mehreren der Ansprüche 1 bis 9, zur Herstellung eines herbiziden Mittels.

14. Herbizides Mittel, enthaltend eine feste, wasserdispergierbare Formulierung gemäß einem oder mehreren der Ansprüche 1 bis 9.

15. Verfahren zur Bekämpfung von Schadpflanzen, worin eine wirksame Menge eines herbiziden Mittels gemäß Anspruch 14 auf die Schadpflanzen, Teile der Pflanzen, Pflanzensamen, die Fläche auf der Pflanzen wachsen appliziert wird.

16. Verwendung eines herbiziden Mittels gemäß Anspruch 14, zur Bekämpfung von Schadpflanzen.

## Claims

1. A solid water-dispersible formulation comprising
(a) as component (a), propoxycarbazone-methyl or its sodium salt, amidosulfuron-methyl or its sodium salt and iodosulfuron-methyl or its sodium salt,
(b) one or more carrier materials,
where
(c) one or more wetting agents from the group of the salts of the alkylated naphthalenesulfonic acids and the salts of dioctylsulfosuccinic acid are used.

2. The solid water-dispersible formulation as claimed in one or more of claims 1 which comprises, as component (b), carrier materials from the group of the natural tectosilicates and the calcium carbonate types.

3. The solid water-dispersible formulation as claimed in one of of claims 1 and 2, additionally comprising, as component (d), further customary auxiliaries and additives.

4. The solid water-dispersible formulation as claimed in claim 3 which comprises, as component (d), further customary auxiliaries and additives from the group of the dispersing agents, disintegrants, antifoam agents and tackifiers.

5. The solid water-dispersible formulation as claimed in one or more of claims 1 to 4, additionally comprising, as component (e), one or more safeners.

6. The solid water-dispersible formulation as claimed in claim 5 which comprises, as component (e), safeners from the group consisting of mefenpyr-diethyl, isoxadifen-ethyl, 4-cyclopropylaminocarbonyl-N-(2-methoxybenzoyl)benzenesulfonamide, 4-isopropylaminocarbonyl-N-(2-methoxybenzoyl)benzenesulfonamide.

7. The solid water-dispersible formulation as claimed in claim 5 or 6, comprising solvents (component e-1) from the group of the aromatic and aliphatic hydrocarbons required, if appropriate, for the safener addition.

8. The solid water-dispersible formulation as claimed in one or more of claims 5 to 7 comprising emulsifiers (component e-2) from the group of the salts of alkylated aromatic sulfonic acids with alkylated copolymers of ethylene oxide and propylene oxide required, if appropriate, for the safener addition.

9. The solid water-dispersible formulation as claimed in one or more of claims 5 to 8 comprising carrier materials (component e-3) from the group of the calcium silicates and precipitated silicic acids required, if appropriate, for the safener addition.

10. A process for preparing a solid water-dispersible formulation as claimed in one or more of claims 1 to 9 which comprises combining the individual components in the respective ratios defined by the preparation.

11. A method for controlling harmful plants, which comprises applying an effective amount of a solid water-dispersible formulation as claimed in one or more of claims 1 to 9 to the harmful plants, to parts of the plants, to plant seeds and/or to the area on which the plants grow.

12. The use of a solid water-dispersible formulation as claimed in one or more of claims 1 to 9 for controlling harmful plants.

13. The use of a solid water-dispersible formulation as claimed in one or more of claims 1 to 9 for preparing a herbicidal composition.

14. A herbicidal composition, comprising a solid water-dispersible formulation as claimed in one or more of claims 1 to 9.

15. A method for controlling harmful plants which comprises applying an effective amount of a herbicidal composition as claimed in claim 14 to the harmful plants, to parts of the plants, to plant seeds and/or to the area on which the plants grow.

16. The use of a herbicidal composition as claimed in claim 14 for controlling harmful plants.

## Revendications

1. Formulation solide, dispersible dans l'eau, contenant :
(a) en tant que composant (a), de la propoxycarbazone-méthyle ou son sel de sodium, de l'amidosulfurone-méthyle ou son sel de sodium et de l'iodosulfurone-méthyle ou son sel de sodium,
(b) un ou plusieurs matériaux supports,
(c) un ou plusieurs agents mouillants du groupe constitué par les sels des acides naphtalinesulfoniques alkylés et les sels de l'acide dioctylsulfosuccinique étant utilisés.

2. Formulation solide dispersible dans l'eau selon une ou plusieurs des revendications 1, dans laquelle des matériaux supports du groupe constitué par les silicates à squelette naturels et les types de carbonate de calcium sont contenus en tant que composant (b).

3. Formulation solide dispersible dans l'eau selon l'une quelconque des des revendications 1 et 2, contenant en outre en tant que composant (d) d'autres adjuvants et additifs usuels.

4. Formulation solide dispersible dans l'eau selon la revendication 3, dans laquelle d'autres adjuvants et additifs usuels du groupe constitué par les dispersants, les agents de désintégration, les agents antimousse et les promoteurs d'adhésion sont contenus en tant que composant (d).

5. Formulation solide dispersible dans l'eau selon une ou plusieurs des revendications 1 à 4, contenant en outre en tant que composant (e) un ou plusieurs agents protecteurs.

6. Formulation solide dispersible dans l'eau selon la revendication 5, dans laquelle des agents protecteurs du groupe constitué par le méfenpyr-diéthyle, l'isoxadifen-éthyle, le 4-cyclopropylaminocarbonyl-N-(2-méthoxybenzoyl)benzènesulfonamide, le 4-isopropylaminocarbonyl-N-(2-méthoxybenzoyl)benzènesulfonamide sont contenus en tant que composant (e).

7. Formulation solide dispersible dans l'eau selon la revendication 5 ou 6, contenant des solvants (composant e-1) éventuellement nécessaires pour l'ajout des agents protecteurs, du groupe constitué par les hydrocarbures aromatiques et aliphatiques.

8. Formulation solide dispersible dans l'eau selon une ou plusieurs des revendications 5 à 7, contenant des émulsifiants (composant e-2) éventuellement nécessaires pour l'ajout des agents protecteurs, du groupe constitué par les sels d'acides sulfoniques aromatiques alkylés avec des copolymères alkylés d'oxyde d'éthylène et de propylène.

9. Formulation solide dispersible dans l'eau selon une ou plusieurs des revendications 5 à 8, contenant des matériaux supports (composant e-3) éventuellement nécessaires pour l'ajout des agents protecteurs, du groupe constitué par les silicates de calcium et les silices précipitées.

10. Procédé de fabrication d'une formulation solide dispersible dans l'eau selon une ou plusieurs des revendications 1 à 9, selon lequel les composants individuels sont rassemblés en les proportions respectives nécessaires pour la fabrication.

11. Procédé de lutte contre des plantes nocives, selon lequel une quantité efficace d'une formulation solide dispersible dans l'eau selon une ou plusieurs des revendications 1 à 9 est appliquée sur les plantes nocives, des parties des plantes, des graines des plantes, la surface sur laquelle les plantes poussent.

12. Utilisation d'une formulation solide dispersible dans l'eau selon une ou plusieurs des revendications 1 à 9 pour lutter contre des plantes nocives.

13. Utilisation d'une formulation solide dispersible dans l'eau selon une ou plusieurs des revendications 1 à 9 pour la fabrication d'un agent herbicide.

14. Agent herbicide, contenant une formulation solide dispersible dans l'eau selon une ou plusieurs des revendications 1 à 9.

15. Procédé de lutte contre des plantes nocives, selon lequel une quantité efficace d'un agent herbicide selon la revendication 14 est appliquée sur les plantes nocives, des parties des plantes, des graines des plantes, la surface sur laquelle les plantes poussent.

16. Utilisation d'un agent herbicide selon la revendication 14 pour lutter contre des plantes nocives.
